# EUROPÄISCHE PATENTSCHRIFT

(11) **EP 3 363 059 B1**
(45) Veröffentlichungstag und Bekanntmachung des Hinweises auf die Patenterteilung: **28.10.2020**
(21) Anmeldenummer: 16785098.1
(22) Anmeldetag: 26.09.2016
(51) Int. Cl.: H01M 2/02, H01M 2/30

(54) **ZELLMODUL ZUR SPEICHERUNG ELEKTRISCHER ENERGIE, BATTERIE UND GEHÄUSE**
CELL MODULE FOR STORING ELECTRICAL ENERGIE, BATTERIE AND ENCLOSURE
MODULE DE CELLULES POUR LE STOCKAGE D'ÉNERGIE ÉLÉCTRIQUE, BATTERIE DE CELLULES, ET BOÎTE

(30) Priorität: 16.10.2015 DE 102015220196
(43) Veröffentlichungstag der Anmeldung: 22.08.2018
(73) Patentinhaber: VW Kraftwerk GmbH, 38440 Wolfsburg (DE); VARTA Microbattery GmbH, 73479 Ellwangen Jagst (DE)
(72) Erfinder: HOLL, Konrad, 73434 Aalen (DE)
(74) Vertreter: Patentanwaltskanzlei Cartagena
(86) Internationale Anmeldenummer: PCT/EP2016/072870
(87) Internationale Veröffentlichungsnummer: WO 2017/063858

(56) Entgegenhaltungen:
- EP-A1- 2 207 221
- EP-A1- 2 958 164
- DE-A1-102006 061 270
- DE-A1-102009 006 465
- DE-A1-102010 024 235
- DE-A1-102010 041 765
- DE-A1-102013 213 550
- JP-A- 2009 272 161

## Beschreibung

Die nachfolgend beschriebene Erfindung betrifft ein Zellmodul zur Speicherung elektrischer Energie und eine Batterie mit einem solchen Zellmodul, insbesondere zur Verwendung in Hybridfahrzeugen.

Bei Hybridfahrzeugen unterscheidet man zwischen reinen Hybriden (kurz: HEV für *"hybrid electric vehicle"*) und sogenannten Plug-in-Hybriden (kurz: PHEV für *plug-in hybrid electric vehicle*), auch Steckdosenhybride genannt.

Bei einem HEV handelt es sich um ein Kraftfahrzeug, das von einem Elektromotor und einem Verbrennungsmotor angetrieben wird. Ein HEV besitzt zwei Energiespeicher, einen Tank für einen Treibstoff wie Benzin, Diesel oder Wasserstoff und eine Batterie zur Speicherung von elektrischer Energie. Weiterhin besitzt es einen Verbrennungsmotor und einen Elektromotor, die mit den zwei Energiespeichern gekoppelt sind. Es ist nicht vorgesehen, die Batterie aus externen Energiequellen zu laden.

PHEVs weisen grundsätzlich den gleichen Aufbau wie HEVs auf. Allerdings kann bei einem PHEV die Batterie auch extern am Stromnetz geladen werden. Die Batterie ist bei einem PHEV meist größer dimensioniert als bei einem HEV.

Als Batterien kommen sowohl bei HEVs als auch bei PHEVs meist modulare Systeme zum Einsatz, die mehrere in Reihe geschaltete Zellen mit jeweils einer positiven und einer negativen Elektrode umfassen. Die Zellen weisen in der Regel ein Gehäuse mit zwei externen Anschlusspolen auf. Einer der Anschlusspole ist mit der mindestens einer positiven Elektrode gekoppelt, der andere mit der mindestens einer negativen Elektrode. Die serielle Verschaltung der Zellen erfolgt in der Regel über die Anschlusspole. So lassen sich z.B. zwölf Zellen auf Basis von Lithium-Ionen (Abschaltspannung der Einzelzelle = 4,2 V) zu einer Batterie mit einer maximalen Spannung von 50,4 V verschalten.

Aus der DE 10 2010 024 235 A1 ist ein Akkumulator bekannt, der innerhalb des gleichen Gehäuses eine energieoptimierte Untereinheit und eine leistungsoptimierte Untereinheit aufweist. Jede der Untereinheiten umfasst einen positiven und einen negativen Pol, der von außerhalb des Gehäuses kontaktiert werden kann. Der Akkumulator ermöglicht es, in Kraftfahrzeugen für verhältnismäßige kurze Zeiten hohe Leistungen und gleichzeitig eine hohe Nennkapazität und einen hohen Energieinhalt zur Verfügung zu stellen.

Aus der JP 2009-272161 A ist ein Zellverbund bekannt, bei mehr als zwei Ableiter separat voneinander aus einem Zellgehäuse herausgeführt werden. Dies dient der Optimierung der Wärmeverteilung innerhalb des Zellverbunds, die bei dem in D2 beschriebenen Zellverbund ein Problem darstellt. Der Zellverbund weist nämlich ein Foliengehäuse auf, aus dem Wärme schlecht abgeführt werden kann. Innerhalb des Zellgehäuses erzeugte Wärme kann jedoch über diese Ableiter aus dem Gehäuse abgeführt werden.

Die EP 2 958 164 A1 betrifft Einzelzellen, bei denen einzelne Elektroden mit Stromableitern verbunden sind, die jeweils zwei Abgriffspole aufweisen (siehe zum Beispiel Fig. 19). In Fig. 34 sind mehrere solche Zellen innerhalb eines gemeinsamen Zellgehäuses angeordnet. Aus dem gemeinsamen Zellgehäuse tritt jeweils nur ein positiver und ein negativer Pol aus. Die Zellen in dem Zellgehäuse sind untereinander in einer bipolaren Anordnung angeordnet.

Aus der DE 10 2006 061270 A1 sind ein Batteriepack und Batteriemodul mit n Zellen und mindestens zwei positiven und zwei negativen Anschlusspolen bekannt. Die Zellen sind alle in Reihe geschaltet, allerdings kann die Zellspannung jeder einzelnen Zelle zwischen einem Paar von Anschlusspolen abgegriffen werden. Ein Batteriebett ist als Temperaturausgleichs- und Kühlkörper ausgebildet und kann als Metallkörper oder ein gut wärmeleitender Kunststoff ausgebildet sein.

Aus der DE 10 2010 0417659 A1 ist ein Energiespeicherpack für eine Elektrowerkzeugmaschine bekannt. Das Energiespeicherpack umfasst ein Gehäuse zur Aufnahme einer Mehrzahl von Zellblöcken mit elektrochemischen Speicherzellen, sowie elektrischen Polanschlüssen an denen elektrische Pole der Zellblöcke elektrisch anschließbar sind. Hierbei umfasst das Gehäuse zwei Polanschlüsse, welche jeweils als Baugruppe ausgebildet sind, wobei jede Baugruppe zwei elektrisch getrennte Kontakte umfasst.

Aus der EP 2207221 A1 ist ein Zellmodul bekannt, bei dem in einem Gehäuse mehrere identische Zellen angeordnet sind, wobei das Gehäuse des beschriebenen Zellmoduls mindestens drei externe elektrische Anschlusspole aufweist.

Aus der DE 10 2009 006 465 A1 ist ein Batteriemodul bekannt, das eine elektrische Zelle, ein Modulgehäuse und zwei oder mehr Kontaktierungseinheiten, die an dem Modulgehäuse angebracht sind, umfasst, wobei jede der Kontaktierungseinheiten jeweils zumindest zwei Anschlüsse aufweist.

Der vorliegenden Erfindung lag die Aufgabe zugrunde, eine modular aufgebaute Batterie bereitzustellen, die sich ohne Variation des Typs oder der Anzahl der von der Batterie umfassten Zellmodule flexibel und einfach an unterschiedliche Anforderungen in HEVs und PHEVs anpassen lässt, insbesondere hinsichtlich der jeweils benötigten Spannung.

Diese Aufgabe wird gelöst durch das Zellmodul zur Speicherung elektrischer Energie mit den Merkmalen des Anspruchs 1 sowie die Batterie mit den Merkmalen des Anspruchs 8. Bevorzugte Ausführungsformen des Zellmoduls sind in den abhängigen Ansprüchen 2 bis 7 sowie 12 definiert. Bevorzugte Ausführungsformen der erfindungsgemäßen Batterie sind in den abhängigen Ansprüchen 9 bis 11 angegeben.

Das erfindungsgemäße Zellmodul umfasst
- ein Modulgehäuse aus Metall und
- innerhalb des Modulgehäuses n Zellen mit jeweils mindestens einer positiven und mindestens einer negativen Elektrode.

Dabei ist *n* ≥ 2 und das Modulgehäuse weist dabei mindestens drei externe elektrische Anschlusspole auf und die n Zellen weisen ein gemeinsames Elektrolytsystem auf.

Als n Zellen kann das Zellmodul grundsätzlich elektrochemische Zellen jeder Art umfassen.. Als Zellen können sowohl Einzelzellen zum Einsatz kommen als auch Zellverbünde, die mehrere Einzelzellen umfassen. Besonders bevorzugt handelt es sich bei den n Zellen um n Einzelzellen.

Der einfachste Fall einer Einzelzelle ist eine Zelle umfassend eine positive und eine negative Elektrode, also Zellen mit der Sequenz
- positive Elektrode / Separator / negative Elektrode.

Als Einzelzellen werden weiterhin auch sogenannten Bizellen angesehen, also Zellen mit der Sequenz
- positive Elektrode / Separator / negative Elektrode / Separator / positive Elektrode
   oder
- negative Elektrode / Separator / positive Elektrode / Separator / negative Elektrode.

Als Zellverbund kann beispielsweise ein Stapel aus mehreren Einzelzellen mit einer der genannten Sequenzen zum Einsatz kommen. Enthält eine Zelle oder ein Zellverbund zwei oder mehr Elektroden derselben Polarität, so ist es in der Regel bevorzugt, dass diese über entsprechende Leiter elektrisch miteinander verbunden sind, meist durch Verschweißung.

In bevorzugten Ausführungsformen umfasst das Zellmodul n Zellen auf Basis von Lithium-Ionen, also Zellen, bei denen bei Lade- und Entladevorgängen Lithium-Ionen von der positiven zur negativen Elektrode und umgekehrt wandern. Die Zellen können innerhalb des Modulgehäuses in Form von Wickeln oder gestapelt vorliegen.

In einigen besonders bevorzugten Ausführungsformen enthält das Modulgehäuse als Zellen n = 2 gewickelte Einzelzellen.

Gemäß der Erfindung sind die n Zellen innerhalb des Modulgehäuses alle identisch. Hierunter soll verstanden werden, dass die Zellen aus den gleichen Materialien und Komponenten und unter jeweils gleichen Bedingungen hergestellt wurden und dass sie jeweils den gleichen Aufbau, die gleiche Nennkapazität und die gleiche Nennspannung aufweisen.

Besonders bevorzugt sind innerhalb des Modulgehäuses n = 2 identische Zellen angeordnet, insbesondere n = 2 identische gewickelte Einzelzellen.

Die mindestens drei externen elektrischen Anschlusspole können grundsätzlich zur unmittelbaren Kontaktierung eines außerhalb des Modulgehäuses befindlichen elektrischen Verbrauchers dienen. Bevorzugt dienen sie allerdings zur Verschaltung des Zellmoduls mit den Polen mindestens eines weiteren Zellmoduls, bevorzugt mindestens eines weiteren Zellmoduls des gleichen Typs.

Als Anschlusspol dient meist ein auf einer Außenseite des Modulgehäuses angeordnetes metallisches Bauteil. Allerdings kann auch das Modulgehäuse selbst als einer der elektrischen Anschlusspole oder zumindest als elektrische Brücke zwischen einem der Anschlusspole und einer der innerhalb des Modulgehäuses angeordneten Elektroden dienen, unter der Voraussetzung, dass es elektrisch leitend ausgebildet ist.

Bevorzugt zeichnet sich das erfindungsgemäße Zellmodul dadurch aus, dass das Modulgehäuse entweder
- zwei positive externe elektrische Anschlusspole, die mit den positiven Elektroden der *n* Zellen elektrisch verbunden sind, und mindestens einen negativen externen elektrischen Anschlusspol, der mit den negativen Elektroden der *n* Zellen elektrisch verbunden ist,
   oder
- zwei negative externe elektrische Anschlusspole, die mit den negativen Elektroden der *n* Zellen elektrisch verbunden sind, und mindestens einen positiven externen elektrischen Anschlusspol, der mit den positiven Elektroden der *n* Zellen elektrisch verbunden ist,
aufweist.

Besonders bevorzugt zeichnet sich das Zellmodul durch mindestens eines der folgenden Merkmale, insbesondere durch eine Kombination der folgenden Merkmale, aus:
- Das Modulgehäuse weist einen ersten und einen zweiten positiven externen elektrischen Anschlusspol auf.
- Das Modulgehäuse weist einen ersten und einen zweiten negativen externen elektrischen Anschlusspol auf.
- Die beiden ersten Anschlusspole gehören einem ersten Stromkreislauf an.
- Die beiden zweiten Anschlusspole gehören einem zweiten Stromkreislauf an.
- Der erste und der zweite Stromkreislauf sind voneinander getrennt.

In einer Weiterbildung sind bei einer solchen besonders bevorzugten Ausgestaltung des erfindungsgemäßen Zellmoduls
- innerhalb des Modulgehäuses eine erste Zelle mit mindestens einer ersten positiven und mindestens einer ersten negativen Elektrode sowie eine zweite Zelle mit mindestens einer zweiten positiven und mindestens einer zweiten negativen Elektrode angeordnet und
- die mindestens eine erste positive Elektrode mit dem ersten positiven externen elektrischen Anschlusspol elektrisch verbunden und
- die mindestens eine erste negative Elektrode mit dem ersten negativen externen elektrischen Anschlusspol elektrisch verbunden und
- die mindestens eine zweite positive Elektrode mit dem zweiten positiven externen elektrischen Anschlusspol elektrisch verbunden und
- die mindestens eine zweite negative Elektrode mit dem zweiten negativen externen elektrischen Anschlusspol elektrisch verbunden.

In einigen Ausführungsformen des erfindungsgemäßen Zellmoduls kann es bevorzugt sein, dass innerhalb des Modulgehäuses Zellen angeordnet sind, die sich voneinander unterscheiden. Diese Variante kann insbesondere vorteilhaft sein, wenn die unterschiedlichen Zellen das gleiche Elektrolytsystem aufweisen. Beispielsweise ist es möglich, eine Zelle auf Basis von C//NMC (Li-Nickel-Mangan-Cobalt) mit einer Zelle auf Basis von C//LFP (Li-Eisenphosphat) zu kombinieren. Beide Systeme verwenden als Elektrolyt in der Regel ein in einem organischen Lösungsmittel (meist einer Mischung aus zwei oder mehr organischen Carbonaten) gelöstes Lithium-Salz.

Durch die erfindungsgemäße Ausgestaltung des Zellmoduls mit mindestens drei externen elektrischen Anschlusspolen lassen sich in ein und demselben Modulgehäuse zwei oder mehr Zellen getrennt voneinander verbauen. Das Zellmodul kann entsprechend unterschiedliche Spannungen liefern.

Mehrere Zellmodule lassen sich je nach Bedarf über ihre externen Anschlusspole in Serie oder parallel verschalten. Dadurch können mit hoher Flexibilität und sehr kostengünstig Batterien aufgebaut werden. So können z.B. zwölf identische Zellmodule auf Basis von Lithium-Ionen (Abschaltspannung der Einzelzelle = 4,2 V), die jeweils mit der erwähnten ersten und der erwähnten zweiten Zelle bestückt sind und jeweils zwei positiven und zwei negativen Anschlusspole aufweisen, die auf die beschriebene Weise mit den Elektroden der ersten und der zweiten Einzelzelle gekoppelt sind, zu einer Batterie mit 1 x 50,4 V oder 2 x 50,4 Volt oder sogar 1x 100,8 V verschaltet werden. Die Batterie mit 1 x 50,4 V ließe sich gegebenenfalls auch mit nur sechs solcher Zellmodule bilden. Besonders eignen sich die Zellmodule daher für den Aufbau sehr kompakter Batterien mit Spannungen bis ≤ 60V. Solche Batterien eignen sich beispielsweise für die eingangs genannten HEVs und PHEVs.

Jede Batterie, die ein erfindungsgemäßes Zellmodul, bevorzugt zwei oder mehr der erfindungsgemäßen Zellmodule umfasst, ist Gegenstand der vorliegenden Erfindung. Die Zellmodule sind dabei bevorzugt über ihre externen elektrischen Anschlusspole seriell oder parallel miteinander verschaltet.

In einer besonders bevorzugten Ausführungsform umfassen erfindungsgemäße Batterien ein erstes und ein zweites Zellmodul gemäß der oben beschriebenen bevorzugten Ausführungsform, bei der
- das Modulgehäuse einen ersten und einen zweiten positiven externen elektrischen Anschlusspol aufweist,
- das Modulgehäuse einen ersten und einen zweiten negativen externen elektrischen Anschlusspol aufweist,
- die beiden ersten Anschlusspole einem ersten Stromkreislauf angehören,
- die beiden zweiten Anschlusspole einem zweiten Stromkreislauf angehören, und
- der erste und der zweite Stromkreislauf voneinander getrennt sind,
wobei der erste positive externe elektrische Anschlusspol des ersten Zellmoduls mit dem ersten negativen externen elektrischen Anschlusspol des zweiten Zellmoduls elektrisch verbunden ist und der zweite positive externe elektrische Anschlusspol des ersten Zellmoduls mit dem zweiten negativen externen elektrischen Anschlusspol des zweiten Zellmoduls elektrisch verbunden ist.

In einer möglichen Weiterbildung dieser besonders bevorzugten Ausführungsform umfasst die Batterie m solche in Reihe geschaltete Zellmodule, wobei m bevorzugt 12 ist und benachbarte Zellmodule bevorzugt jeweils verschaltet sind wie das erste und das zweite Zellmodul.

Bevorzugt umfasst die Batterie mindestens eine Zelle auf Basis von C//NMC (Li-Nickel-Mangan-Cobalt) und/oder auf Basis von C//LFP (Li-Eisenphosphat).

Die Batterie kann ein Behältnis umfassen, in dem die miteinander verschalteten Zellmodule nebeneinander angeordnet sind. Dabei kann es sich beispielsweise um ein Behältnis aus Kunststoff handeln.

Ein für das erfindungsgemäße Zellmodul konstruiertes Modulgehäuse zeichnet sich dadurch aus, dass es mindestens drei Durchbrechungen, bevorzugt vier Durchbrechungen, aufweist, durch welche elektrische Leiter aus dem Inneren des Modulgehäuses nach außen geführt sind. Bei den elektrischen Leitern kann es sich beispielsweise um Polbolzen handeln.

Das Modulgehäuse besteht aus Metall, beispielsweise einem Aluminiumblech.

Das Modulgehäuse setzt sich bevorzugt aus einem Behältnis mit einem rechteckigen Gehäuseboden und vier im rechten Winkel dazu angeordneten Seitenwänden sowie einem Gehäusedeckel, der im Wesentlichen die gleiche Form und Größe wie der Gehäuseboden aufweist, zusammen. Mit anderen Worten, es ist bevorzugt quaderförmig. Der Gehäusedeckel ist in aller Regel kaum profiliert und kann als näherungsweise eben bezeichnet werden. Meist wird das Modulgehäuse verschlossen, indem die Ränder des Gehäusedeckels mit dem Öffnungsrand des Behältnisses verschweißt werden.

Besonders bevorzugt besteht das Modulgehäuse aus einem Metall wie dem genannten Aluminiumblech und es setzt sich aus dem Behältnis mit dem rechteckigen Gehäuseboden und dem beschriebenen Gehäusedeckel zusammen.

Da das Modulgehäuse aus Metall besteht, müssen die durch die Durchbrechungen geführten elektrischen Leiter vom Modulgehäuse isoliert sein.

Weitere Merkmale der Erfindung sowie aus der Erfindung resultierende Vorteile ergeben sich aus der nachfolgenden Beschreibung der Zeichnungen, anhand derer die Erfindung illustriert wird. Die nachfolgend beschriebenen Ausführungsformen dienen lediglich zur Erläuterung und zum besseren Verständnis der Erfindung und sind in keiner Weise einschränkend zu verstehen.

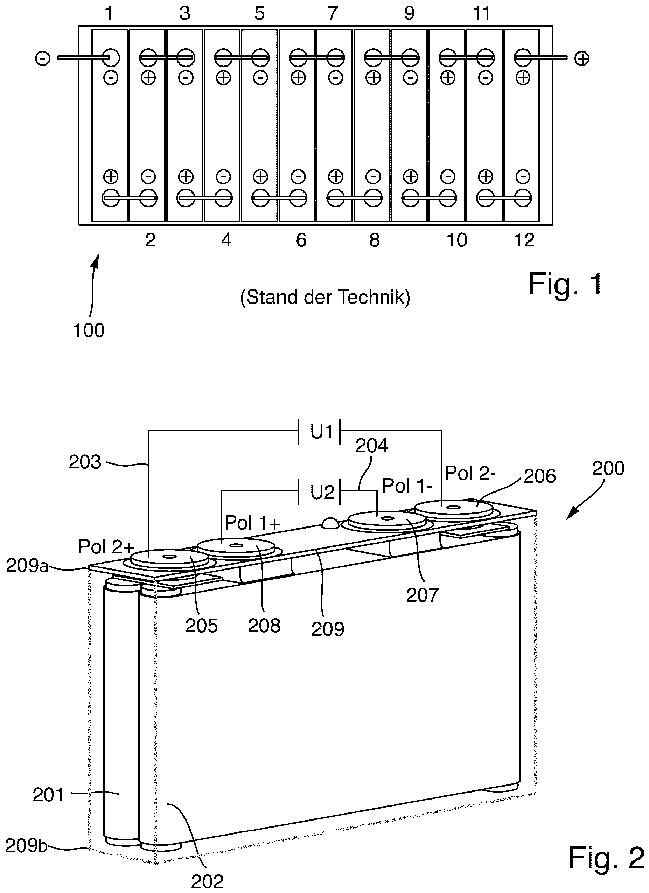

Fig. 1 (Stand der Technik) zeigt eine Draufsicht auf eine Batterie 100, die sich aus herkömmlichen Zellen, welche jeweils ein Gehäuse mit zwei elektrischen Anschlusspolen (einem Plus-und einem Minuspol) aufweisen, zusammensetzt. Bei der Zeichnung handelt es sich um eine schematische Darstellung.

Insgesamt umfasst die Batterie zwölf Zellen 1-12 auf Basis von Lithium-Ionen (Spannung des einzelnen Moduls: 4,2 V). Die Plus- und Minuspole benachbarter Zellen sind jeweils über ihre Anschlusspole elektrisch miteinander verbunden. Durch diese serielle Verschaltung lassen sich die zwölf Zellen zu einer Batterie mit einer maximalen Spannung von 50,4 V verschalten.

Fig. 2 zeigt eine Draufsicht (schematisch) auf eine Ausführungsform eines erfindungsgemäßen Zellmoduls 200. Das Zellmodul 200 umfasst zwei Wickelzellen 201 und 202, jeweils mit mindestens einer positiven und mindestens einer negativen Elektrode. Darüber hinaus umfasst es vier externe Anschlusspole, die positiven Anschlusspole 205 und 208 und die negativen Anschlusspole 206 und 207. Die Zellen 201 und 202 sind innerhalb des Modulgehäuses 209 angeordnet. Das Modulgehäuse 209 setzt sich aus dem Behältnis 209b (zwecks besserer Übersicht hier transparent gezeichnet) mit einem rechteckigen Gehäuseboden und vier im rechten Winkel dazu angeordneten Seitenwänden sowie einem Gehäusedeckel 209a, der im Wesentlichen die gleiche Form und Größe wie der Gehäuseboden aufweist, zusammen.

Der positive Anschlusspol 205 ist elektrisch mit der mindestens einen positiven Elektrode einer der beiden Wickelzellen 201 und 202 verbunden. Der positive Anschlusspol 208 ist elektrisch mit der mindestens einen positiven Elektrode der anderen der beiden Wickelzellen 201 und 202 verbunden. Der negative Anschlusspol 206 ist elektrisch mit der mindestens einen negativen Elektrode einer der beiden Wickelzellen 201 und 202 verbunden. Der negative Anschlusspol 207 ist elektrisch mit der mindestens einen negativen Elektrode der anderen der beiden Wickelzellen 201 und 202 verbunden. Die beiden Anschlusspole 205 und 206 gehören einem ersten Stromkreislauf 203 an. Die beiden Anschlusspole 207 und 208 gehören einem zweiten Stromkreislauf 204 an. Der erste und der zweite Stromkreislauf 203 und 204 sind voneinander getrennt.

Da es sich bei den Wickelzellen 201 und 202 um identische Zellen (Lithium-Ionen-Zellen mit einer Spannung von 4,2 V) handelt, liefern der erste und der zweite Stromkreis jeweils die gleiche Spannung (U1 = U2).

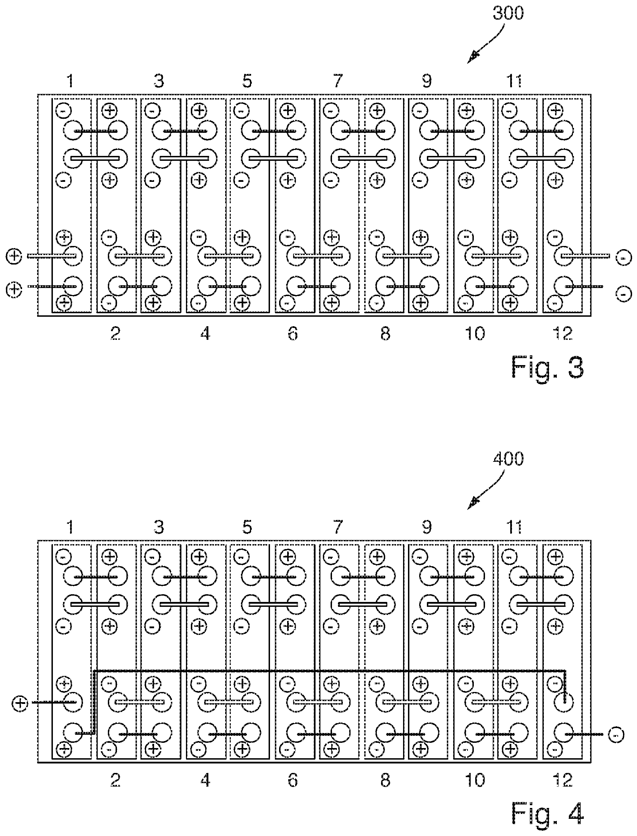

Fig. 3 zeigt eine Draufsicht (schematisch) auf eine Ausführungsform einer erfindungsgemäßen Batterie 300, die sich aus Zellmodulen zusammengesetzt ist, wie sie in Fig. 2 dargestellt sind. Jedes der Zellmodule 1-12 weist entsprechend ein Modulgehäuse mit vier elektrischen Anschlusspolen (zwei Plus- und zwei Minuspolen) auf.

Die Plus- und Minuspole benachbarter Zellmodule sind jeweils über ihre Anschlusspole elektrisch miteinander verbunden. Die gewählte Verschaltung der zwölf Zellmodule liefert eine Batterie, welche zweimal (unabhängig voneinander) eine maximale Spannung von 50,4 V liefern kann.

Fig. 4 zeigt eine Draufsicht (schematisch) auf eine Ausführungsform einer erfindungsgemäßen Batterie 400, die sich aus Zellmodulen zusammengesetzt ist, wie sie in Fig. 2 dargestellt sind. Jedes der Zellmodule 1-12 weist entsprechend ein Gehäuse mit vier elektrischen Anschlusspolen (zwei Plus- und zwei Minuspolen) auf.

Die Plus- und Minuspole benachbarter Zellmodule sind jeweils über ihre Anschlusspole elektrisch miteinander verbunden. Darüber hinaus ist ein positiver Anschlusspol des Zellmoduls 1 mit einem negativen Anschlusspol des Zellmoduls 12 elektrisch verbunden. Die gewählte Verschaltung der zwölf Zellmodule liefert eine Batterie, welche eine maximale Spannung von 100,8 V liefern kann.

## Patentansprüche

1. Zellmodul zur Speicherung elektrischer Energie, umfassend
• ein Modulgehäuse aus Metall und
• innerhalb des Modulgehäuses *n* Zellen mit jeweils mindestens einer positiven und mindestens einer negativen Elektrode,
wobei *n* ≥ 2 ist und das Modulgehäuse mindestens drei externe elektrische Anschlusspole aufweist und alle Zellen in dem Modulgehäuse identisch sind und die *n* Zellen ein gemeinsames Elektrolytsystem aufweisen.

2. Zellmodul nach Anspruch 1, **dadurch gekennzeichnet, dass** es als *n* Zellen n Batterie-und/oder Kondensatorzellen umfasst.

3. Zellmodul nach Anspruch 1 oder Anspruch 2, **dadurch gekennzeichnet, dass** das Modulgehäuse einer der elektrischen Anschlusspole ist.

4. Zellmodul nach einem der vorhergehenden Ansprüche, **dadurch gekennzeichnet, dass** das Modulgehäuse
• zwei positive externe elektrische Anschlusspole, die mit den positiven Elektroden der *n* Zellen elektrisch verbunden sind, und mindestens einen negativen externen elektrischen Anschlusspol, der mit den negativen Elektroden der *n* Zellen elektrisch verbunden ist,
oder
• zwei negative externe elektrische Anschlusspole, die mit den negativen Elektroden der *n* Zellen elektrisch verbunden sind, und mindestens einen positiven externen elektrischen Anschlusspol, der mit den positiven Elektroden der *n* Zellen elektrisch verbunden ist,
aufweist.

5. Zellmodul nach einem der vorhergehenden Ansprüche, **dadurch gekennzeichnet, dass** das Modulgehäuse
• einen ersten und einen zweiten positiven externen elektrischen Anschlusspol aufweist,
• einen ersten und einen zweiten negativen externen elektrischen Anschlusspol aufweist,
• die beiden ersten Anschlusspole einem ersten Stromkreislauf angehören,
• die beiden zweiten Anschlusspole einem zweiten Stromkreislauf angehören und
• der erste und der zweite Stromkreislauf voneinander getrennt sind.

6. Zellmodul nach Anspruch 5, **dadurch gekennzeichnet, dass**
• innerhalb des Modulgehäuses eine erste Zelle mit mindestens einer ersten positiven und mindestens einer ersten negativen Elektrode sowie eine zweite Zelle mit mindestens einer zweiten positiven und mindestens einer zweiten negativen Elektrode angeordnet sind und
• die mindestens eine erste positive Elektrode mit dem ersten positiven externen elektrischen Anschlusspol elektrisch verbunden ist und
• die mindestens eine erste negative Elektrode mit dem ersten negativen externen elektrischen Anschlusspol elektrisch verbunden ist und
• die mindestens eine zweite positive Elektrode mit dem zweiten positiven externen elektrischen Anschlusspol elektrisch verbunden ist und
• die mindestens eine zweite negative Elektrode mit dem zweiten negativen externen elektrischen Anschlusspol elektrisch verbunden ist.

7. Batterie, umfassend zwei oder mehr Zellmodule gemäß einem der vorhergehenden Ansprüche, welche über ihre externen elektrischen Anschlusspole seriell oder parallel miteinander verschaltet sind.

8. Batterie nach Anspruch 7, umfassend ein erstes und ein zweites Zellmodul nach Anspruch 5 oder Anspruch 6, wobei der erste positive externe elektrische Anschlusspol des ersten Zellmoduls mit dem ersten negativen externen elektrischen Anschlusspol des zweiten Zellmoduls elektrisch verbunden ist und der zweite positive externe elektrische Anschlusspol des ersten Zellmoduls mit dem zweiten negativen externen elektrischen Anschlusspol des zweiten Zellmoduls elektrisch verbunden ist.

9. Batterie nach einem der Ansprüche 7 oder 8, umfassend *m* in Reihe geschaltete Zellmodule gemäß einem der Ansprüche 5 oder 6, wobei *m* bevorzugt 12 ist und benachbarte Zellmodule bevorzugt jeweils verschaltet sind wie das erste und das zweite Zellmodul gemäß Anspruch 8.

10. Batterie nach einem der Ansprüche 7 bis 9, umfassend mindestens eine Zelle auf Basis von C//NMC (Li-Nickel-Mangan-Cobalt) und/oder auf Basis von C//LFP (Li-Eisenphosphat).

11. Zellmodul nach einem der Ansprüche 1 bis 6, **dadurch gekennzeichnet, dass** das Modulgehäuse mindestens drei Durchbrechungen aufweist, durch welche elektrische Leiter aus dem Inneren des Modulgehäuses nach außen geführt sind.

## Claims

1. Cell module for storing electrical energy, comprising
• a module housing made from metal and
• within the module housing, *n* cells each having at least one positive and at least one negative electrode,
wherein *n* ≥ 2 and the module housing has at least three external electrical connection poles and all of the cells in the module housing are identical and the *n* cells have a common electrolyte system.

2. Cell module according to Claim 1, **characterized in that** it comprises *n* battery cells and/or capacitor cells as the *n* cells.

3. Cell module according to Claim 1 or Claim 2, **characterized in that** the module housing is one of the electrical connection poles.

4. Cell module according to one of the preceding claims, **characterized in that** the module housing has
• two positive external electrical connection poles that are electrically connected to the positive electrodes of the *n* cells and at least one negative external electrical connection pole that is electrically connected to the negative electrodes of the *n* cells,
or
• two negative external electrical connection poles that are electrically connected to the negative electrodes of the *n* cells and at least one positive external electrical connection pole that is electrically connected to the positive electrodes of the *n* cells.

5. Cell module according to one of the preceding claims, **characterized in that** the module housing
• has a first and a second positive external electrical connection pole,
• has a first and a second negative external electrical connection pole,
• the two first connection poles belong to a first circuit,
• the two second connection poles belong to a second circuit, and
• the first and the second circuit are isolated from one another.

6. Cell module according to Claim 5, **characterized in that**
• a first cell having at least one first positive and at least one first negative electrode and a second cell having at least one second positive and at least one second negative electrode are arranged within the module housing, and
• the at least one first positive electrode is electrically connected to the first positive external electrical connection pole, and
• the at least one first negative electrode is electrically connected to the first negative external electrical connection pole, and
• the at least one second positive electrode is electrically connected to the second positive external electrical connection pole, and
• the at least one second negative electrode is electrically connected to the second negative external electrical connection pole.

7. Battery, comprising two or more cell modules according to one of the preceding claims that are connected in series or parallel with one another by way of their external electrical connection poles.

8. Battery according to Claim 7, comprising a first and a second cell module according to Claim 5 or Claim 6, wherein the first positive external electrical connection pole of the first cell module is electrically connected to the first negative external electrical connection pole of the second cell module and the second positive external electrical connection pole of the first cell module is electrically connected to the second negative external electrical connection pole of the second cell module.

9. Battery according to either of Claims 7 and 8, comprising *m* series-connected cell modules according to either of Claims 5 and 6, wherein *m* is preferably 12, and adjacent cell modules are preferably in each case connected in the same way as the first and the second cell module according to Claim 8.

10. Battery according to one of Claims 7 to 9, comprising at least one cell based on C//NMC (Li-nickel-manganese-cobalt) and/or based on C//LFP (Li-iron phosphate).

11. Cell module according to one of Claims 1 to 6, **characterized in that** the module housing has at least three perforations through which electrical conductors are routed outwardly from the inside of the module housing.

## Revendications

1. Module à cellules destiné à accumuler de l'énergie électrique, comprenant
• un boîtier de module en métal et
• à l'intérieur du boîtier de module, *n* cellules ayant respectivement au moins une électrode positive et au moins une électrode négative,
*n* ≥ 2 et le boîtier de module possédant au moins trois pôles de raccordement électriques externes et toutes les cellules dans le boîtier de module étant identiques et les *n* cellules possédant un système d'électrolyte commun.

2. Module à cellules selon la revendication 1, **caractérisé en ce qu'**il comprend en tant que *n* cellules *n* cellules de batterie et/ou de condensateur.

3. Module à cellules selon la revendication 1 ou la revendication 2, **caractérisé en ce que** le boîtier de module est l'un des pôles de raccordement électriques.

4. Module à cellules selon l'une des revendications précédentes, **caractérisé en ce que** le boîtier de module possède
• deux pôles de raccordement électriques externes positifs, qui sont reliés électriquement aux électrodes positives des *n* cellules, et au moins un pôle de raccordement électrique externe négatif, qui est relié électriquement aux électrodes négatives des *n* cellules,
ou
• deux pôles de raccordement électriques externes négatifs, qui sont reliés électriquement aux électrodes négatives des *n* cellules, et au moins un pôle de raccordement électrique externe positif, qui est relié électriquement aux électrodes positives des *n* cellules.

5. Module à cellules selon l'une des revendications précédentes, **caractérisé en ce que** le boîtier de module
• possède un premier et un deuxième pôle de raccordement électrique externe positif,
• possède un premier et un deuxième pôle de raccordement électrique externe négatif,
• les deux premiers pôles de raccordement appartiennent à un premier circuit électrique,
• les deux deuxièmes pôles de raccordement appartiennent à un deuxième circuit électrique, et
• les premier et deuxième circuits électriques sont séparés l'un de l'autre.

6. Module à cellules selon la revendication 5, **caractérisé en ce que**
• une première cellule ayant au moins une première électrode positive et au moins une première électrode négative ainsi qu'une deuxième cellule ayant au moins une deuxième électrode positive et au moins une deuxième électrode négative sont disposées à l'intérieur du boîtier de module et
• l'au moins une première électrode positive est reliée électriquement au premier pôle de raccordement électrique externe positif et
• l'au moins une première électrode négative est reliée électriquement au premier pôle de raccordement électrique externe négatif et
• l'au moins une deuxième électrode positive est reliée électriquement au deuxième pôle de raccordement électrique externe positif et
• l'au moins une deuxième électrode négative est reliée électriquement au deuxième pôle de raccordement électrique externe négatif.

7. Batterie, comprenant deux modules à cellules ou plus selon l'une des revendications précédentes, lesquels sont interconnectés en série ou en parallèle les uns avec les autres par le biais de leurs pôles de raccordement électriques externes.

8. Batterie selon la revendication 7, comportant un premier et un deuxième module à cellules selon la revendication 5 ou selon la revendication 6, le premier pôle de raccordement électrique externe positif du premier module à cellules étant relié électriquement au premier pôle de raccordement électrique externe négatif du deuxième module à cellules et le deuxième pôle de raccordement électrique externe positif du premier module à cellules étant relié électriquement au deuxième pôle de raccordement électrique externe négatif du deuxième module à cellules.

9. Batterie selon l'une des revendications 7 et 8, comprenant *m* modules à cellules selon l'une des revendications 5 et 6 branchés en série, *m* étant de préférence égal à 12 et les modules à cellules voisins étant respectivement de préférence interconnectés comme le premier et le deuxième module à cellules selon la revendication 8.

10. Batterie selon l'une des revendications 7 à 9, comprenant au moins une cellule à base de C//NMC (Li-Nickel-Manganèse-Cobalt) et/ou à base de C//LFP (Li-Phosphate de fer).

11. Module à cellules selon l'une des revendications 1 à 6, **caractérisé en ce que** le boîtier de module possède au moins trois percées à travers lesquelles des conducteurs électriques sont amenés de l'intérieur du boîtier de module vers l'extérieur.
